# EUROPÄISCHE PATENTANMELDUNG

(11) **EP 2 930 426 A1**
(43) Veröffentlichungstag der Anmeldung: **14.10.2015**
(21) Anmeldenummer: 15163439.1
(22) Anmeldetag: 13.04.2015
(51) Int. Cl.: F23J 15/04, F23J 15/06

(54) **ABGASWÄRMETAUSCHER UND VERFAHREN ZUR WÄRMERÜCKGEWINNUNG AUS ABGASEN**

(30) Priorität: 11.04.2014 DE 102014005377
(71) Anmelder: Full, Hans, 21244 Buchholz (DE)
(72) Erfinder: Full, Hans, 21244 Buchholz (DE)
(74) Vertreter: Müller Schupfner & Partner Patent- und Rechtsanwaltspartnerschaft mbB

(57) **Zusammenfassung**

Gegenstand der Erfindung ist ein Abgaswärmetauscher, ein entsprechendes Verfahren oder eine Verbrennungsanlage mit dem Abgaswärmetauscher, wonach Abgase aus Verbrennungsanlagen, wie Feuerungsanlagen, Wärmekraftmaschinen oder Verbrennungsmotoren, Wärme entzogen und die Abgase gleichzeitig gereinigt werden. Die Wärme wird in einem Wärmetauscher zur weiteren Nutzung abgeführt. Die Feuerungsanlagen sind insbesondere Heizungskessel, Kaminöfen, Kohleöfen, Hackschnitzelheizungen oder Pelletheizungen, welche insbesondere mit Brennstoffen pflanzlicher oder fossiler Herkunft betrieben werden.

## Beschreibung

### Gegenstand der Erfindung

Die Erfindung betrifft einen Abgaswärmetauscher und ein entsprechendes Verfahren wonach Abgase aus Verbrennungsanlagen, wie Feuerungsanlagen, Wärmekraftmaschinen oder Verbrennungsmotoren, Wärme entzogen und die Abgase gleichzeitig gereinigt werden. Die Wärme wird in einem Wärmetauscher zur weiteren Nutzung abgeführt. Die Feuerungsanlagen sind insbesondere Heizungskessel, Kaminöfen, Kohleöfen, Hackschnitzelheizungen oder Pelletheizungen, welche insbesondere mit Brennstoffen pflanzlicher oder fossiler Herkunft betrieben werden.

### Stand der Technik:

Es ist bekannt, Abgase, insbesondere Rauchgase aus Feuerungsanlagen, mit Abgaswäschern zu waschen und von Schadstoffen wie SO₂/SO₃, NOₓ, CO, CO₂, Staub, Ruß und/oder Asche zu befreien bzw. deren Konzentration zu mindern. Es sind auch Abgaswäscher vorgeschlagen worden, welche gleichzeitig in der Lage sind, dem Abgas Restwärme zur weiteren Nutzung zu entziehen, um im Ergebnis den wärmetechnischen Wirkungsgrad von Heizungsanlagen zu erhöhen.

In der Industrie gibt es zahlreiche Ausführungen von Gaswaschtürmen zum Reinigen von Gasen; wobei diese Technik nicht ohne weiteres auf Verbrennungsanlagen übertragbar ist, wie diese zur Wärmegewinnung etwa in Einfamilienhäusern, Mehrfamilienhäusern, Wohnanlagen oder bei kommunalen Wärmeversorgern (Fernwärme) betrieben werden.

Die CH 465889 offenbart z.B. ein industrielles Verfahren zur Reinigung von Abgasen, die bei der Entfernung von Wasserstoff aus Aluminiumschmelzen durch Einleiten von Chlor entstehen. Das Abgas wird mit einer Temperatur, die oberhalb der Sublimationstemperatur des darin enthaltenen Aluminiumchlorids liegt, in einen Fallfilmkondensator geleitet und mit Wasser, das in Form an den Wandungen von herabfließenden Flüssigkeitsoberflächen bereitgestellt wird, in Berührung gebracht. Das Wasser hat eine Temperatur unter der Sublimationstemperatur, wobei das Aluminiumchlorid an den Flüssigkeitsoberflächen kondensiert und von dem Wasser als Feststoff ausgetragen wird.

### Aufgabe

Aufgabe der vorliegenden Erfindung ist es, einen Abgaswärmetauscher zu schaffen, der gleichzeitig in der Lage ist Schadstoffe, insbesondere Feinstaub, aus Abgasen wie diese in Verbrennungsanlagen entstehen, zu entfernen. Insbesondere sind dies Verbrennungsanlagen zur Wärme, Kraft- oder kombinierten Wärme- und Elektrizitätsgewinnung, in denen Brennstoffe aus pflanzlichen Quellen, wie Holz oder Kohle, oder fossile Brennstoffe wie Heizöl oder Kohle, verbrannt werden.

Der Abgaswärmetauscher soll in der Lage sein, in den Brennwertbereich bei der Verbrennung von insbesondere fossilen oder pflanzlichen Brennstoffen, wie z. B. Holz, Pellets und Kohle, zu kühlen, ohne dass dies zum Verkleben der Rauchzüge führt. Ziel ist weiterhin eine Verbesserung des Wirkungsgrades auch durch den zusätzlichen Wärmegewinn durch Kondensat-Bildung. Weiterhin soll die Abfuhr des Abgases verbessert werden.

### Zusammenfassung der Erfindung

Die Erfindung ist durch den Gegenstand der unabhängigen Patentansprüche beschrieben. Vorteilhafte Ausgestaltungen sind Gegenstand der Unteransprüche oder nachfolgend beschrieben.

Eine Besonderheit der vorliegenden Erfindung ist die Unterstützung der Abgasströmung durch Einleiten eines flüssigen Wärmeträgermediums, insbesondere Wasser, in der Abgasströmungsrichtung (d.h. im Gleichstrom) in einer Abgasbeschleunigungsstrecke, insbesondere in einem Fallrohr, und die Übertragung der kinetischen Energie des Wärmeträgermediums auf das Abgas, auch um das Abgas der Verbrennungsstelle durch eine gewisse Sogwirkung zu entziehen. Es ist besonders vorteilhaft, wenn das Wärmeträgermedium eine Geschwindigkeit von größer 1 m/sec, insbesondere von größer 1,5 m/sec aufweist. Das Wärmeträgermedium ist insbesondere Wasser und die Erfindung ist nachfolgend an Wasser als Wärmeträgermedium erläutert, ohne auf Wasser beschränkt zu sein. Wenn es nachfolgend Wasser oder Systemwasser heißt, kann der Begriff somit auch gegen Wärmeträgermedium ausgetauscht werden und umgekehrt, ausgenommen das Wasser, was zur Wasserdampfgenerierung eingesetzt wird bzw. kondensiert wird, wobei dieses nach Kondensation Teil der Systemwassers wird..

Die Erfindung ist insbesondere geeignet, als Nachkühler bei Heizungskesseln, einschließlich von Kohleöfen, Pellet- und Hackschnitzleöfen und Kaminöfen eingesetzt zu werden.

Durch die Einspritzung des Wärmeträgermediums (auch als Wasser oder Systemwasser bezeichnet) wird das Abgas abgekühlt und beschleunigt, insbesondere auf größer 1 m/sec oder größer 1,5 m/sec, vorzugsweise erfolgt dies in einem Fallrohr mit nach unten gerichteter Wassereinspritzung. In der Ausgestaltung mit Fallrohr wird durch die Schwerkraftwirkung des Wassers die Abgasströmung unterstützt, indem das Wasser kinetische Strömungsenergie auf das Abgas überträgt und gleichzeitig das Abgas Wärme auf das Wasser überträgt. Es wird quasi das Prinzip einer Wasserstrahlpumpe genutzt. Es ist bevorzugt, dass das Wärmeträgermedium / das Wasser über der Abgaseinleitung eingeleitet wird, so dass es schon eine gewisse Fallgeschwindigkeit hat, wenn es auf das Abgas trifft. Nach einer bevorzugten Ausführungsform ist das Fallrohr etwa lotrecht (+/- 30°) angeordnet und weiter bevorzugt wird das Abgas etwa senkrecht (+/- 30°) zum lotrechten (+/- 30°) Fallrohr in das Fallrohr eingeleitet.

In einer Berührungszone mit gegenüber dem Abgas- und Fallrohr (bzw. der Abgasbeschleunigungsstrecke) vorzugsweise vergrößerter Strömungsfläche ist ein Wassersammelbehälter vorgesehen in den Abgas und Systemwasser gemischt nach unten gerichtet eintritt, und das Abgas sodann nach oben abgeleitet wird, insbesondere verlangsamt nach oben abgeleitet wird (z.B. mit 1 m/sec).

Der Abgaswärmetauscher wird insbesondere so betrieben, das etwaiges Wasser aus dem Verbrennungsprozess und/oder Wasser, das zu Zwecken der Verdampfung in das noch heiße Abgas aufgegeben wird, am Ende der Abgasbeschleunigungsstrecke kondensiert ist und im Wassersammelbehälter abgeschieden bzw. aufgefangen wird.

Eine Wasserpumpe fördert das Wasser aus dem Wassersammelbehälter des Wasserabscheiders über einen Wärmetauscher zurück zur Einspritzung in das Abgasfallrohr. Es ist vorteilhaft, diese Pumpe als Niedrigenergiepumpe auszugestalten z.B. mit einer Pumpleistung von 45 Watt oder kleiner.

Das Systemwasser wir nach einer bevorzugten Ausführungsform nur mit geringem Druck in die Abgasbeschleunigungsstrecke eingespritzt, so dass sich die Geschwindigkeit des Systemwassers in der Abgasbeschleunigungsstrecke im Wesentlichen durch den freien Fall des Systemwassers ergibt; dies um die Pumpe mit möglichst geringer Leistung zu betreiben.

Nach einer Ausgestaltung ist die Einspritzstelle etwa 10 bis 30 cm über der Abgaseinleitung, z. B. ca. 20 cm darüber, angeordnet, womit die Leistung, die von der Pumpe für das Einspritzen aufgebacht werden muss, gegen null gehen kann, weil das Wasser, dann die notwendige Fallgeschwindigkeit erreicht hat, um das Abgas entsprechend mitzuziehen.

In dem Wärmetauscher findet ein Wärmeübergang Wasser (Wärmeträgermedium 1) -> Wasser (Wärmeträgermedium) mit höherem Wirkungsgrad als bei einem Übergang Abgas -> Wasser (Wärmeträgermedium 2) jeweils über Kontaktflächen statt. Der Wärmetauscher kann z.B. als Röhren- oder Plattenkühler ausgeführt sein. Die Wärme kann auch einem Carnot-Prozeß, einem Clausius-Rankine-Kreisprozess oder einer Wärmepumpe zugeführt werden.

Es ist ein Wasserüberlauf zur Regulierung des Wasserstandes im Wassersammelbehälter vorgesehen, der faktisch der Ableitung von Kondenswasser aus dem Abgas dient. Die meisten Verbrennungsvorgänge beinhalten ein Brenngut, das während der Verbrennung Wasser erzeugt und/noch Restfeuchte hat, so dass im Ergebnis stets ein Überschuss an Wasser entsteht. Dem Abgaswärmetauscher muss also in der Regel kein Wasser zugeführt werden, sondern es muss im Gegenteil Wasser abgeführt werden, wenn der Prozess im Kondensatbereich geführt wird, was i.d.R. wünschenswert ist. Der Brennwert eines Brennstoffes gibt die Wärmemenge an, die bei Verbrennung und anschließender Abkühlung der Verbrennungsgase auf 25 °C sowie deren Kondensation freigesetzt wird.

Es ist überdies ein Temperaturwächter vorgesehen, der bei Nicht-Einhaltung einer vorgegebenen Temperatur oder eines vorgegebenen Temperaturbereichs Alarm auslöst, (nur) den Wasserkreislauf unterbricht und/oder die Anlage insgesamt abschaltet.

Darüber hinaus ist eine Wasserauffüllleitung zum Einfüllen von Systemwasser und Nachfüllen, wenn kein Überschuss durch Kondenswasser entsteht, sowie zum Ausspülen von Verbrennungsrückstanden über den Überlauf oder den Ablauf, vorgesehen.

Nach einer weiteren Ausgestaltung kann es vorgesehen sein, dass eine kleinere Teilmenge des Systemwassers in den heißen Abgasstrom eingespeist wird, bevor das Abgas mit dem eigentlichen Wärmeträgermedium / Systemwasser in Kontakt gebracht wird, um die Teilmenge Wasser vorab zu verdampfen und anschließend in der Abgasbeschleunigungsstrecke, insbesondere dem Fallrohr, wieder zu kondensieren. Dies hat u.a. anderem den Vorteil, dass Feinstaub in dem so erzeugten (insbesondere übersättigten) Wasserdampf Kondensationskeime bildet und so effektiv mit dem Systemwasser mitgerissen werden kann, wenn die Teilmenge Wasser zumindest zum Teil wieder kondensiert wird.

Eine Feuerungsanlage mit dem erfindungsgemäßen Abgaswärmetauscher weist folgende Vorteile auf: Die Wärmeübertragung bleibt immer konstant, weil für die Wärmeübertragung Abgas / Wasser keine metallischen Kühlflächen notwendig sind, an denen sich Ruß und Feinstaub absetzen könnte. Der Abgaswärmetauscher verhindert Verstopfungen, die bei normalen Wärmetauschern auftreten, bei denen eine Wärmeträgerflüssigkeit durch ein Rohrleitungssystem oder Metallblock geleitet wird, das/der vom Abgas überströmt ist. Es kann auf Rußfilter verzichtet werden. Feinstaub und Ruß werden im Abgaswärmetauscher abgeschieden und können leicht ausgespült werden.

Der Abgaswärmetauscher hat einen positiven Einfluss auf die Brennstelle und fördert die Verbrennung, weil anstelle von Gegendruck eine Saugwirkung erzeugt wird. Eine Feuerungsanlage mit dem erfindungsgemäßen Abgaswärmetauscher benötigt für die Saugwirkung daher nicht mehr eine Saugwirkung, wie sie durch einen Kamin oder einen Ventilator erzeugt wird.

Mit einem kleinen Wasser-Wasser-Wärmetauscher kann die aus dem Abgas abgeführte Wärme effektiver z.B. in eine Zentralheizung übertragen werden. Der Abgaswärmetauscher ist nicht teurer als ein normaler Nachkühler. Die Wärmenutzung von Kaminöfen kann mehr als verdoppelt werden.

Mit der Nachkühleinrichtung können Kaminöfen zu einer Wärmequelle mit hohem Wirkungsgrad und niedriger Feinstaubemission aufgerüstet werden, ohne teurere Maßnahmen am Kaminöfen oder zur Feinstaub Reduzierung, wie etwa elektrostatische Abscheider.

Die Anlage kann als alleiniger Wärmetauscher oder für eine Restwärmenutzung als Nachkühler an Heizungsanlagen, welche bereits einen konventionellen Wärmetauscher haben, eingesetzt werden. Sie eignet sich zum Beispiel für Blockheizkraftwerke zur Abgasrestwärmenutzung und zur zusätzlichen Wärmenutzung bei einer Kaminfeuerung, einem Kohleofen, einem Pelletofen oder Holzschnitzelofen.

In dem Abgaswärmetauscher können die Abgase bis auf Umgebungstemperatur (z.B. ca. 25°C bis 30°C) abgekühlt werden (Austrittstemperatur). Die fühlbare und latente Wärme wird während des Waschprozesses von dem Systemwasser aufgenommen und an den Wärmetauscher abgegeben. Das Abgas verlässt die Anlage als gekühlte und gegenüber dem Rauchgas aus dem Verbrennungsprozeß gereinigte Abluft. Eine Ableitung über einen Kamin ist nicht notwendig.

Ein besonderer Vorteil der Erfindung für Feuerungsanlagen für fossile und pflanzliche Brennstoffe, wie insbesondere wasserführende Kaminöfen, ist dass der wasserführende Wärmetauscher nicht vorgeheizt werden muss, z.B. auf 60°C, um Verstopfungen und Anlagerungen von Feinstaub im Kondensatbereich zu vermeiden, wie sie bei konventionellen Systemen erfolgen die den Kondensatbereich vermeiden müssen. Da das System keine Kühlflächen hat, kann man ohne Vorheizen direkt die Wärme in die Hausheizungsanlage mit einem Wasser-Wärmetauscher übertragen oder separate Heizkörper, einschließlich einer Fussbodenheizung, mit dem erwärmten Systemwasser betreiben. Bei der direkten Nutzung der Wärme können die Leitungssysteme vorteilhafterweise entsprechend säurebeständig ausgeführt werden oder etwaige Säure ist zu neutralisieren.

Die Wärme muss von dem Wärmetauscher nicht mehr wie bei konventionellen Systemen in einen Wärmespeicher mit integriertem weiteren Wärmetauscher abgegeben werden.

Bei Feuerungsanlagen, insbesondere wasserführenden Kaminöfen, kann es vorteilhaft sein, während der Anheizphase die Systemwassergeschwindigkeit durch Steigerung der Fördergeschwindigkeit der Pumpe zu erhöhen, womit die Saugleistung durch die Impulsübertragung auf das Abgas auf z.B. über 1,5 m/sec erhöht wird. Vorteilhafterweise erfolgt dies, indem die Fallgeschwindigkeit des Wassers durch die Spritzwirkung erhöht wird.

Es kann vorgesehen sein, die Temperatur des heißen Abgases zu messen und bei Absinken unter einen Grenzwert die Saugleistung zu erhöhen und bei Übersteigen eines Grenzwertes die Saugleistung zu erniedrigen

### Detaillierte Beschreibung der Erfindung

Die Abgase werden in ein Fallrohr geleitet, in das Wasser in Richtung des Abgasstromes eingeleitet wird. Das Wasser tritt z.B. aus einem zentral liegenden Rohr über Schlitze oder entlang der Mantelfläche eines Kegels (Kegelspitze auf die Austrittsöffnung gerichtet) kreisförmig in Form von Regentropfen oder Regenschnüren aus. Die Schwerkraft und ggf. zusätzlich der Wasserdruck an der Austrittsstelle beschleunigt das Wasser und zieht das Abgas mit. Auf einen Abgasventilator kann daher i.d.R. verzichtet werden.

Die Menge des Wassers, die in die Abgasbeschleunigungsstrecke eingeleitet wird, kann über die Pumpe und Ventile gesteuert werden. Vorzugsweise wird in ein Fallrohr geleitet. Das Systemwasser kann z.B. über einen verschieblichen spitzen Kegel in der Rohröffnung geleitet werden, der einen kegelförmigen Spritzwasserschwall erzeugt. Wenn gewünscht, können Prallbleche vorgesehen sein, die dafür sorgen, dass der Spritzwasserschwall nicht an den Wandungen abläuft, sondern als möglichst gleichmäßig verteilter Regen das Fallrohr durchläuft.

Je nach Auslegung des Rohrdurchmessers, Falllänge, Pumpenleistung und/oder Spritzrichtung des Wassers kann Unterdruck gegenüber der Einleitungsstelle des Abgases in dem Abgaswärmetaucher erzeugt werden bzw. das Ausmaß des Unterdrucks reguliert werden. Der durch die Abkühlung des Abgases verminderte Sog kann damit gezielt und wenn gewünscht sogar regelbar ausgeglichen werden ohne dass unmittelbar auf die Brennstelle Einfluss genommen werden muss. Bei offenen Kaminen kann damit der Rauchaustritt in die Wohnräume beim Anfeuern unterbunden werden.

Das Wasser als Wärmeträger wird, von einem Wassersammelbehälter mit einer Pumpe zur Wärmeübertragung durch einen Wasser/Wasser-Kühler oder Wasser/Wärmeträgermedium-Kühler, im Kreislauf zur Abgaswassereinmischung im Fallrohr zurückgepumpt. Es ist aber auch möglich, die Wärmetauscher bereits in den Wassersammelbehälter / Wärmeträgermediumsammelbehälter zu integrieren, dann könnte das Wasser aus dem Wassersammelbehälter direkt zum Einlass in das Fallrohr bzw. die Abgasbeschleunigungsstrecke gepumpt werden. Der Wasser/Wasser-Kühler oder Wasser/Wärmeträgermedium-Kühler oder Wärmeträgermedium / Wärmeträgermedium-Kühler kann als Platten- oder Rohrbündelkühler ausgestaltet sein.

Der wesentliche Vorteil gegenüber einem Wärmetauscher mit Abgas/Wasser liegt darin, dass der Wärmeübergang in einem Wasser-/Wasserkühler ca. 20 x höher ist. Der Wärmetauscher kann auf Grund seines guten Wirkungsgrades vergleichsweise klein sein und ermöglicht ein kleineres Wärmegefälle womit die Wärmenutzung erhöht werden kann.

Der Kühler des Wärmtauschers ist vorzugsweise mit dem Heizungsrücklaufwasser zu beaufschlagen. Die Brennwerttechnik wird besser genutzt und es kann ein Wirkungsgrad gegenüber dem Heizwert von über 100% erreicht werden. Das Systemwasser wird vorzugsweise unter 40°C, insbesondere unter 30°C vom Wärmetauscher gekühlt.

Da keine Ablagerungen im Kühler entstehen, bleibt der Wirkungsgrad ohne Wartungsaufwand konstant. Das wärmetragende Umlaufwasser kann je nach Bedarf neutralisiert werden und ist lediglich, je nach Partikelanfall, durch Spülen über den Überlauf auszutauschen. Für den Austausch des Wassers als Wärmeüberträgerflüssigkeit ist ein Ablauf im Wassersammelbehälter vorgesehen, vorzugsweise mit einem Sumpf zum Auffangen von Sedimentationsgut.

Ein weiterer Vorteil liegt darin, dass die meisten bei der Verbrennung entstehenden Feststoffe im Wasser verbleiben, und sich nicht im weiterführenden Abgasrohr absetzen können und mit dem Abgas in die Luft gelangen.

In dem Abgaswäscher werden die Abgase auf ca. 25° bis 30°C, insbesondere 30 bis 40°C Austrittstemperatur, abgekühlt.

Die Wärme wird von einem geschlossenen Kühlwasser- System bestehend aus:
- Wasserspeicher,
- Wasserumwälzpumpe,
- Rohrschlangen- bzw. Rohrbündelkühler oder Plattenkühler, und
- Rohrleitungszuführungssystem
aufgenommen. Das erwärmte Kühlwasser wird z.B. der Heizungsanlage als Frischwasser bzw. Brauchwasser zugeführt.

### Beschreibung eines Ausführungsbeispiels

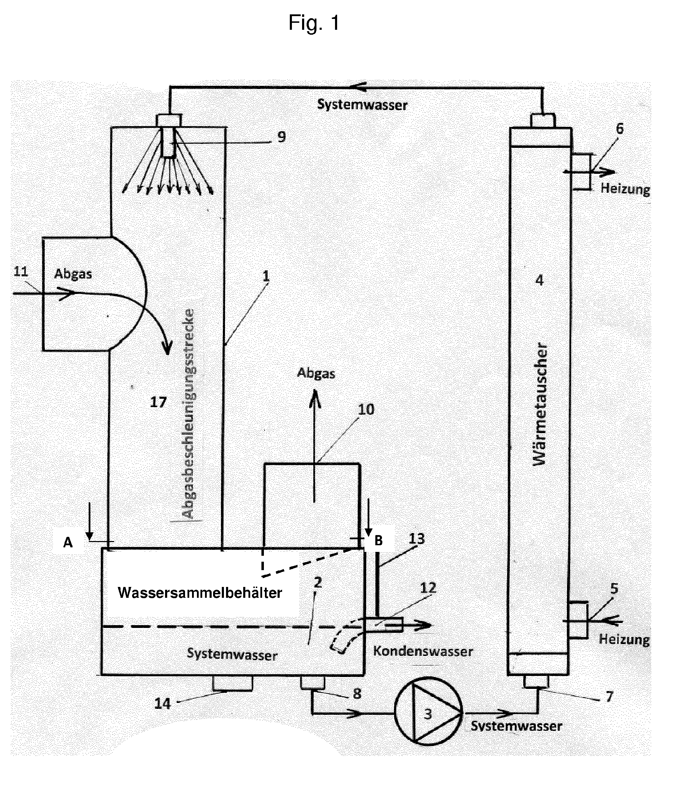

Ein Ausführungsbeispiel der Erfindung ist anhand der
Fig. 1 den Abgaswärmetauscher darstellend und
Fig. 2 einen Schnitt entlang der Ebene AB durch das Fallrohr und den Abgasaustritt dargestellt und wird im Folgenden näher beschrieben.

Aus dem Abgasrohr tritt heißes Abgas 11 in die Abgasbeschleunigungsstrecke 17 ein, die als Fallrohr 1 für das Systemwasser ausgebildet ist. Ein steter gleichmäßig über den Querschnitt des Fallrohres 1 verteilter Regen an Systemwasser aus der Wassereinspritzung 9 auf einer Temperatur von 30 bis 50°C kühlt das heiße Abgas in den Kondensationsbereich ab und heizt sich geleichzeitig auf. Das Systemwasser hat im unteren Bereich des Fallrohres 1 eine Fallgeschwindigkeit von ca. 2 m/sec. Systemwasser und Kondensat werden im Wassersammelbehälter 2 gesammelt. Hier tritt eine Beruhigung ein und ggf. ein Sammeln von Sedimentationsstoffen, die über den Wasserablass 14 z.B. zu Reinigungszwecken, abgelassen werden können. Gleichzeitig ist ein Überlauf 12 mit Rohrbelüftung 13 (gegen eine etwaige Saughebelwirkung) vorgesehen. Der Überlauf 12 ist im Wesentlichen wegen des Wasserüberschusses durch Kondensation aus dem Abgas vorgesehen. Das abgekühlte Abgas 10, z.B. auf 30 bis 40°C, tritt den Wassersammelbehälter 2 verlassend nach oben gerichtet aus, z.B. mit 1 m/sec. Das Abgasrohr für das abgekühlte Abgas weist unten einen Spritzwasserschutz auf. Systemwasser wird dem Wassersammelbehälter 2 an der Systemwasserentnahmestelle 8 über die Umlaufpumpe 3 entzogen und über die Systemwassereintrittsstelle 7 in den Wärmetauscher 4 gepumpt, um schlussendlich wieder über die Wassereinspritzung 9 in das Fallrohr eingeleitet zu werden.

Durch den Wärmetauscher 4 wird Wasser aus dem Rücklauf der Heizung eingeführt (5), das vorgewärmt der Heizung zugeführt werden kann (6). Es ist auch möglich, diese Wärme in einen Wärmespeicher, der auch ohne einen Wärmetauscher ausgestaltet sein kann, zu überführen (z.B. einen solchen, der mit Wärmetransfermaterialen ausgestattet ist) oder die Wärme einem Carnot-Prozeß, Clausius-Rankine-Kreisprozess oder einer Wärmepumpe zuzuführen.

Nicht abgebildet ist, dass ein Teil des Systemwassers in die Abgasleitung eingespritzt wird, wo das Abgas Temperaturen von über 100°C aufweist, um Nassdampf / übersättigten Wasserdampf zu bilden, der durch Feinstaub und dessen Keimbildung im Fallrohr kondensiert werden soll. Dies unterstützt effizient die Abfuhr von Feinstaub..

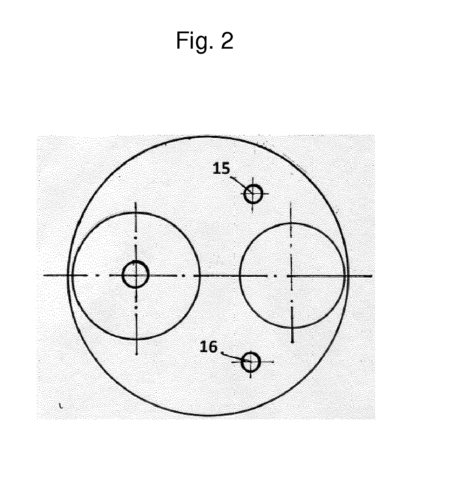

Der Wassersammelbehälter 2 weist überdies eine Temperaturmessstelle 16 und einen Wassereinlass 15 auf (Fig.2).

### Bezugszeichenliste

- Fallrohr: 1
- Wassersammelbehälter /:
- Wärmeträgermediumsammelbehälter: 2
- Wasserpumpe: 3
- Wärmetauscher: 4
- Heizungswassereintritt: 5
- Heizungswasseraustritt: 6
- Systemwassereintrittsstelle: 7
- Systemwasserentnahmestelle: 8
- Wassereinspritzung: 9
- Abgasaustritt nach Abkühlung: 10
- Abgaseintritt vor Abkühlung: 11
- Kondenswasser-Überlauf: 12
- Rohrbelüftung gegen Saugheberwirkung: 13
- Wasserablass: 14
- Wassereinlass: 15
- Temperaturmessstelle: 16
- Abgasbeschleunigungsstrecke: 17

## Patentansprüche

1. Abgaswärmtauscher umfassend eine Abgaseinleitung zum Austritt von heißen Abgasen aus Verbrennungsprozessen in eine Abgasbeschleunigungsstrecke und ein Wärmträgermedium, das in die Abgasbeschleunigungsstrecke als Flüssigkeit verteilt eingespritzt wird, um das Abgas mitzureißen, das über die Abgaseinleitung in die Abgasbeschleunigungsstrecke eintritt und Wärme an das Wärmträgermedium abzugeben, einen Wärmeträgermediumsammelbehälter, dem das erwärmte Wärmeträgermedium und etwaiges Kondensat aus dem Abgas zugeleitet werden, wobei das Wärmeträgermedium einem Wärmeaustausch in einem Wärmetauscher unterzogen wird oder das Wärmeträgermedium unmittelbar einer Wärmenutzung zugeführt wird und das so abgekühlte Wärmeträgermedium der Abgasbeschleunigungsstrecke erneut zugeführt wird.

2. Abgaswärmtauscher nach Anspruch 1, wobei das Wärmträgermedium Wasser ist.

3. Abgaswärmtauscher nach Anspruch 1 oder 2, wobei die Abgasbeschleunigungsstrecke als Fallrohr ausgebildet ist und die kinetische Energie des Wärmeträgermediums, das in das Fallrohr eingespritzt wird, im Wesentlichen durch den freien Fall erzeugt wird.

4. Abgaswärmtauscher nach Anspruch 1, 2 oder 3, wobei
a) der Wärmetauscher Wärme an eine Heizungsanlage, einen Wärmespeicher oder eine Wärmepumpe abgibt oder
b) die unmittelbare Wärmenutzung erfolgt, indem das Wärmemedium direkt durch einen oder mehrere Heizkörper geleitet wird.

5. Verfahren zum Abgaswärmaustausch umfassend eine Abgaseinleitung zum Austritt von heißen Abgasen aus Verbrennungsprozessen in eine Abgasbeschleunigungsstrecke und ein Wärmträgermedium, das in die Abgasbeschleunigungsstrecke als Flüssigkeit eingespritzt wird, um das Abgas mitzureißen, das über die Abgaseinleitung in die Abgasbeschleunigungsstrecke eintritt, und Wärme an das Wärmträgermedium abzugeben, einen Wärmeträgermediumsammelbehälter, dem das erwärmte Wärmeträgermedium und etwaiges Kondensat aus dem Abgas am Ende der Abgasbeschleunigungsstrecke zugeleitet wird,
wobei das Wärmeträgermedium im Wärmeträgermediumsammelbehälter einem Wärmeaustausch mit einem Wärmetauscher unterzogen wird oder das Wärmeträgermedium unmittelbar einer Wärmenutzung zugeführt wird. und das so abgekühlte Wärmeträgermedium der Abgasbeschleunigungsstrecke erneut zugeführt wird.

6. Verfahren nach Anspruch 5, wobei das Wärmträgermedium Wasser ist.

7. Verfahren nach Anspruch 5 oder 6, wobei die Abgasbeschleunigungsstrecke als Fallrohr ausgebildet ist und die kinetische Energie des Wärmeträgermediums das in das Fallrohr eingespritzt wird, im Wesentlichen durch den freien Fall erzeugt wird.

8. Verfahren nach zumindest einem der Ansprüche 5 bis 7, wobei dem heißen Abgas vor Eintritt in die Abgasbeschleunigungsstrecke Wasser zur Bildung von Wasserdampf zugeführt wird, der in der Abgasbeschleunigungsstrecke wieder kondensiert wird.

9. Verfahren nach zumindest einem der Ansprüche 5 bis 8, wobei das Abgas in der Abgasbeschleunigungsstrecke auf eine Geschwindigkeit von größer 1 m/sec, vorzugsweise größer 1,5 m/sec, beschleunigt wird.

10. Verfahren nach zumindest einem der Ansprüche 5 bis 9, wobei das Abgas ein Rauchgas aus einer Feuerungsanlage für fossile oder pflanzliche Brennstoffe ist.

11. Verfahren nach zumindest einem der Ansprüche 5 bis 10, wobei das Abgas am Ende der Abgasbeschleunigungstrecke auf eine Temperatur von 30 bis 50°C abgekühlt ist.

12. Verfahren nach zumindest einem der Ansprüche 5 bis 11, wobei das Abgas Wasserdampf aus dem Verbrennungsprozess enthält und der Wasserdampf am Ende der Abgasbeschleunigungstrecke kondensiert wird.

13. Verfahren nach zumindest einem der Ansprüche 5 bis 12, wobei
a) der Wärmetauscher Wärme an eine Heizungsanlage, einen Wärmespeicher oder eine Wärmepumpe abgibt oder
b) die unmittelbare Wärmenutzung erfolgt, indem das Wärmemedium direkt durch einen oder mehrere Heizkörper geleitet wird.

14. Verbrennungsanlage, in deren Abgasstrom der Abgaswärmtauscher nach einem der Ansprüche 1 bis 4 geschaltet ist.

15. Verbrennungsanlage nach Anspruch 14, wobei die Verbrennungsanlage eine Wärmekraftmaschine oder ein Feuerungsanlage wie ein Heizkessel, ein Kaminofen, ein Kohleofen, eine Hackschnitzelheizung oder eine Pelletheizung ist, vorzugsweise jeweils betrieben mit pflanzlichen oder fossilen Brennstoffen.
